# EUROPEAN PATENT APPLICATION

(11) **EP 4 265 124 A1**
(43) Date of publication of application: **25.10.2023**
(21) Application number: 23169171.8
(22) Date of filing: 21.04.2023
(51) Int. Cl.: A23L 9/20, A23C 13/14

(54) **METHOD FOR PREPARING THICKENING COOKING CREAM AND OBTAINED COOKING CREAM**

(30) Priority: 22.04.2022 BE 202205303
(71) Applicant: Inex nv, 9520 Bavegem (Sint-Lievens-Houtem (BE)
(72) Inventor: GEEROMS, Johan, 9520 Bavegem (Sint-Lievens-Houtem) (BE)
(74) Representative: Brantsandpatents bv

(57) **Abstract**

The current invention relates to a method for preparing cooking cream, comprising the steps of: providing a pasteurized cream fraction and a pasteurized milk fraction, pre-homogenizing the cream fraction, standardizing the product by mixing in the milk fraction until a predetermined fat content is reached, and mixing in a milk protein source until a predetermined protein content is reached, the two-stage post-homogenization of the product, the UHT treatment of the product, whereby cooking cream is obtained, and the filling and cooling of the cooking cream, where one or more types of carrageenan are added during standardization. The invention also relates to cooking cream with an increased protein content, preferably obtained according to the above-mentioned method.

## Description

### TECHNICAL FIELD

The invention relates to a method for manufacturing cooking cream. More specifically, the invention relates to a method for producing cooking cream with post-thickening properties.

### PRIOR ART

Cream is still widely used to "finish" soups and sauces, which means: thickening without losing smoothness, rounding off the taste (masking bitter flavors and tempering sour ones, but making them last longer), and making the appearance whiter. Consumers also use cream for this purpose, but since using "regular" cream requires quite a bit of skill, culinary cream products such as cooking cream have been developed.

Typically, the thickness of well-known culinary cream products decreases significantly once they are incorporated into the final product or dish due to the strong dilution. Packaging these culinary cream products thicker is often difficult due to the nature of the packaging machines.

In addition, a long list of food additives, such as thickeners, are undesirable for the consumer.

An optimized method for preparing dairy products, such as milk and cream, is known from BE1026755, but uses various thickeners and E numbers and also does not take into account the thickening of the product.

US2007071874 focuses on cream compositions, specifically whipped cream compositions, containing hydroxypropylmethylcellulose (HPMC), hydroxypropylcellulose (HPC), methylhydroxyethylcellulose (MHEC), methylcellulose (MC) or ethylcellulose (EC), and mixtures thereof with water-soluble or water-absorbable hydrocolloids. However, the addition of such a long list of additives is not desired by the consumer.

There is a need for an improved method of preparing a cooking cream that maintains its thickness when processed in an application, without compromising its creaminess, and without having to add a large number of food additives during preparation.

The present invention aims to find a solution for at least some of the above problems.

### SUMMARY OF THE INVENTION

The invention relates to a method for preparing cooking cream according to claim 1.

The method is advantageous because the carrageenans interact with the casein proteins present in the cream and which on the one hand form an elastic gel that ensures protein stabilization and on the other hand form a fairly firm gel after cooling, causing the product to thicken. In this way, a cooking cream is obtained that retains its thickness when processed in an application, without compromising its creaminess, and without having to add a large number of food additives during preparation.

Preferred forms of the method are set out in claims 2-13.

In a specific preferred form the invention relates to a method according to claim 3, wherein the protein content is increased during standardization.

The preferred form is advantageous because, unlike products on the market which usually contain a protein content around 2.7 m%, the increased protein content allows more proteins to form a gel when heated and contribute to the thickening of the cooking cream.

In a second aspect, the invention relates to cooking cream according to claim 14.

Cooking cream must always meet legal requirements in order to be allowed to be marketed as cooking cream or culinary cream. Consumers also always want reduced-fat products, but a sufficiently high fat content is necessary to prevent curdling when used in hot dishes. A fat content of 21 m% is sufficient to qualify as cooking cream and does not require the addition of extra stabilizing or thickening agents, such as modified starches to prevent curdling. The cooking cream is a cream with a high degree of continued thickening, which significantly increases in viscosity once it's filled, specifically between 8 and 12 times. This is important to obtain a thick cream that does not lose its thickness in an application. The cooking cream can only thicken in the packaging, as otherwise lumps will form.

A preferred form is shown in claim 15.

### DESCRIPTION OF THE FIGURES

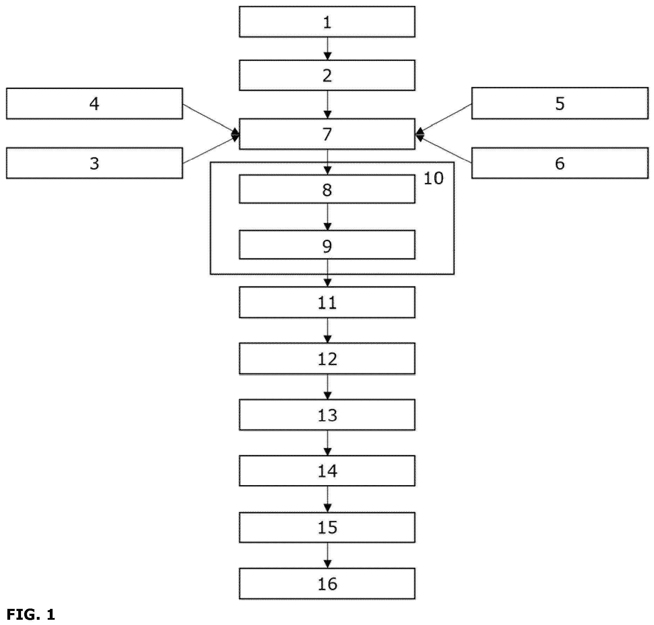

**Figure 1** schematically depicts an embodiment of the present invention. The following numbering refers to:
1: Pasteurized cream fraction
2: Pre-homogenizing
3: Pasteurized skimmed milk fraction
4: Skimmed milk powder
5: Kappa-carrageenan
6: Iota-carrageenan
7: Mixing and standardizing
8: First homogenization stage
9: Second homogenization stage
10: Post-homogenization
11: Preheating
12: UHT treatment
13: Cooling
14: Filling and stacking using the open stacking method on pallets
15: Cooling
16: Close piling of pallets and wrapping them for transport

### DETAILED DESCRIPTION

The invention relates to a method for preparing a strongly post-thickening cooking cream.

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

When the term "around" or "about" is used in this document with a measurable quantity, a parameter, a duration or moment, and the like, then variations are meant of approx. 20% or less, preferably approx. 10% or less, more preferably approx. 5% or less, even more preferably approx. 1% or less, and even more preferably approx. 0.1% or less than and of the quoted value, insofar as such variations are applicable in the described invention. However, it must be understood that the value of a quantity used where the term "about" or "around" is used, is itself specifically disclosed.

The terms 'comprise', 'comprising', 'consist of', 'consisting of', 'provided with', 'have', 'having', 'include', 'including', 'contain', 'containing' are synonyms and are inclusive or open terms that indicate the presence of what follows, and which do not exclude or prevent the presence of other components, characteristics, elements, members, steps, as known from or disclosed in the prior art.

The term "m%," as used in the text, is synonymous with "mass%" or "weight%" and refers, unless otherwise defined, to the relative weight of the respective component based on the total weight of the composition or product.

Quoting numerical intervals by endpoints comprises all integers, fractions and/or real numbers between the endpoints, these endpoints included.

In the context of this invention, the term "homogenization" refers to a process in which the particle size of the fat particles in the dairy product is treated in such a way that smaller, uniform fat particles are created that are evenly distributed throughout the dairy product. The particle size is reduced under conditions of extreme pressure, turbulence, acceleration and impact.

The term "gelling" or "gelation" in the present invention refers to a process in which milk proteins form a network in which water is trapped under the influence of the interaction between the milk proteins and the carrageenan molecules, whether or not supported by the naturally present calcium ions, whereby the liquid product becomes firmer (solidifies) into a gel (after cooling).

In the present invention, the terms "cooking cream," "cook's cream" and "culinary cream" refer to a dairy product with a fat content of between 20 and 30 m% for use in hot dishes.

In the present invention, the term "UHT treatment" refers to a process in which a very short heat treatment is carried out (only a few seconds) at a temperature comprised between 135 and 150°C. This gives a sterilized product with minimal heat damage to the product properties.

In the present invention, the term "standardization" refers to a process in which the fat content of a first dairy stream is reduced by adding a second dairy stream (comprising a maximum of 0.5 m% milk fat, such as, for example, skimmed milk). Standardization ensures that the desired or legal amount of milk fat is present in the first dairy stream before it undergoes further processing steps. Standardization may also include adding a milk protein source, such as skimmed milk powder, to increase the protein content to a predetermined protein level.

The term "fat content" refers to the amount of milk fat present in a dairy product, calculated on the total product weight. The fat content can be measured, for example, by means of a Fourier-transform infrared measurement (FTIR). The fat content is preferably measured according to ISO 2450:2008|IDF 16:2008.

The term "protein content" refers to the amount of whey and casein proteins present in a dairy product, calculated on the total product weight. The protein content can be measured, for example, by means of a Fourier-transform infrared measurement (FTIR). The protein content is preferably measured in accordance with ISO 16634-2:2016.

In a first aspect, the invention relates to a method for preparing cooking cream.

According to an embodiment, the method comprises the steps of:
i. providing a pasteurized cream fraction, a pasteurized skimmed milk fraction and a milk protein source,
ii. pre-homogenizing the cream fraction,
iii. standardizing the product from step ii. by mixing in the milk fraction and the milk protein source until a predetermined fat content and protein content are reached,
iv. the two-stage post-homogenization of the product from step iii.,
v. the UHT treatment of the product from step iv., whereby cooking cream is obtained,
vii. filling the product from step v., and
viii. cooling the product from step vii.

According to a preferred embodiment, one or more types of carrageenan are added during standardization.

Carrageenans are natural products and are extracted from red algae that live in the sea ( *Chondrus crispus, Gigartina stellata, Euchema spinosum, E. cottonii*) in Europe, America and Asia. It is a complex mixture of natural polysaccharides comprising galactose units as the main component. Carrageenans are large, highly flexible molecules that can curl into a helix, and with multiple ionic binding opportunities per molecule, allowing them to form a gel and interact with other charged molecules. The gel formation from the carrageenans in the product supports the post-thickening properties of the cooking cream obtained.

According to an embodiment, two types of carrageenan are added, preferably an iota-carrageenan and a kappa-carrageenan. Iota-carrageenan comprises in its molecular structure two sulfate groups per two galactose groups. It interacts with the casein proteins present in the cream and forms an elastic gel that ensures protein stabilization. Kappa-carrageenan comprises one sulfate group per two galactose groups and also interacts with the casein proteins. It forms a fairly firm gel that thickens the product.

In a preferred embodiment, three types of carrageenan are added, preferably an iota-carrageenan, a kappa-carrageenan, and a lambda-carrageenan. Lambda-carrageenan comprises in its molecular structure three sulfate groups per two galactose groups. It interacts well with the milk proteins present but forms a very weak gel.

The inventors found that if only lambda-carrageenan was added, the viscosity of the product rose sharply after filling into the packaging, but that a sticky product was obtained that did not easily come back out of the packaging. The inventors found that if no lambda-carrageenan was added, a product was obtained that had a low hot viscosity but exhibited strong clot formation.

The inventors found that if kappa-carrageenan was not added, a strong whey separation occurred in the packaging and that the product was too sticky and not thickened enough. The inventors also found that if no iota-carrageenan was added, the product was insufficiently thickened after filling, and there was significant clot formation.

A strongly post-thickening cream after filling and which could be removed from the packaging as a lump of cream was obtained after the addition of the three types of carrageenan.

In a further preferred form, the lambda-carrageenan is in proportion to the total amount of iota- and kappa-carrageenan according to a weight ratio between 90/10 and 99/1, more preferably according to a weight ratio between 93/7 and 98/2, even more preferably according to a weight ratio between 95/5 and 97/3, and most preferably according to a weight ratio between 95.5/4.5 and 96.5/3.5.

In this way, a cooking cream is obtained that retains its thickness when processed in an application, without compromising its creaminess, and without having to add a large number of food additives during preparation.

In a preferred form, a total amount of carrageenan is added of at most 0.1 m% of the total amount of product, preferably at most 0.075 m% of the total amount of product, more preferably at most 0.05 m% of the total amount of product, even more preferably at most 0.035 m% of the total amount of product.

In another or further preferred form, a total amount of carrageenan is added which lies between 0.001 m% and 0.1 m% of the total amount of product, preferably between 0.005 m% and 0.075 m% of the total amount of product, more preferably between 0.01 m% and 0.05 m% of the total amount of product.

In another or further preferred form, a total amount of iota- and kappa-carrageenan is added which lies between 0.0005 m% and 0.010 m% of the total amount of product, preferably between 0.001 m% and 0.005 m% of the total amount of product, more preferably between 0.0015 m% and 0.0025 m% of the total amount of product.

The pasteurized cream fraction and the pasteurized milk fraction are prepared from a milk stream, the milk stream being fractionated into a cream fraction and a skimmed milk fraction by means of centrifugal separation. This is a process known to a person skilled in the technical field. The skimmed milk fraction comprises a maximum of 0.5 m% milk fat. Subsequently, the cream fraction and the skimmed milk fraction are each pasteurized. Preferably, the cream fraction has a fat content comprised between 22 and 30 m%, preferably between 22 and 26 m%, preferably about 24 m%.

The term "pasteurization" in the present invention is intended to mean a process whereby harmful bacteria in perishable food products are destroyed by briefly heating the food, without changing the product too much. Pasteurization can be done, for example, by means of high temperature/short time (HTST) treatment, ultra-high temperature (UHT) treatment, high heat/short time (HHST) treatment or serial pasteurization. This is a process known to a person skilled in the technical field.

The term "pre-homogenization" refers to homogenization prior to standardization (step ii.).

According to a preferred form, the method comprises pre-homogenization at a pressure comprised between 60 and 160 bar. From 60 bar a good pre-homogenization is already achieved, with a considerable reduction of the fat particles. In principle, the pressure can be further increased to 160 bar, above which the risk of fat damage becomes considerably high. An optimal pre-homogenization is therefore obtained within this range. Preferably, this pressure is between 90 and 150 bar, more preferably between 110 and 130 bar, most preferably about 120 bar. At this pressure, an optimal pre-homogenization is achieved, whereby a narrow particle size distribution in the cream fraction is obtained. According to a preferred form, the pre-homogenization continues at a temperature comprised between 50°C and 75°C, preferably between 55 and 70°C.

Pre-homogenization is advantageous because the fat droplets are reduced in size, thus increasing the interaction with the proteins. This is because the amount of natural phospholipids in the milk is too limited to "fill / cover" this fat surface, that has become available, as an emulsifier, so that part of the caseins present in milk (namely those with a hydrophobic part in the molecule) take over that task: the hydrophobic part has the fairly strong interaction with the fat; the remaining (hydrophilic) part with the water.

According to an embodiment, the cream fraction is homogenized during pasteurization.

The method has the advantage that the cream fraction has a whiter color after pre-homogenization, and that the sensitivity to fat oxidation is significantly lower, which contributes to increased stability and improved shelf life. The advantage of the present method also consists in that the pre-homogenization of the cream fraction already causes a strong reduction of the fat particles present therein.

According to a preferred form, the predetermined fat content is comprised between 15 and 22 m%, preferably between 20 m% and 22 m%, more preferably about 21 m%. Cooking cream must always meet legal requirements in order to be allowed to be marketed as cooking cream or culinary cream. Consumers increasingly want reduced-fat products, but a sufficiently high fat content is necessary to prevent curdling when used in hot dishes. A fat content of 21 m% is sufficient to qualify as cooking cream and does not require the addition of extra thickening agents, such as modified starches to prevent curdling.

According to a preferred form of the present invention, a milk protein source is added during mixing.

Adding a milk protein source increases the protein content of the product. Skimmed milk powder, sodium caseinate or other similar milk protein comprising products are all suitable as a milk protein source in the present method. Skimmed milk powder is preferably used. The protein content determines the physicochemical quality of the resulting product, i.e. cooking cream in the present invention, as it contributes to the thickening of the cooking cream through protein gelation.

The term "skimmed milk powder" in the present invention is intended to mean a product produced from fresh skimmed cow's milk. After the milk has been pasteurized and standardized, it is thickened by evaporation and made into a powder through a spray-drying process.

According to a preferred embodiment, skimmed milk powder is added during standardization until a protein content is reached of between 3 and 5 m%, preferably between 3 and 4.5 m%, more preferably between 3 and 4 m%, even more at preferably between 3 and 3.5 m%, most preferably between 3.2 and 3.4 m%.

Cooking cream available on the market often only has a maximum protein content of 3%. The increased protein content is necessary so that more proteins can form a gel when heated and subsequently cooled and contribute to the thickening of the cooking cream.

A protein content that is too high leads to a product that is too firm, which is also annoyingly sticky. A protein content that is too low results in a too thin/too wet product.

According to a preferred form, in step iii, the milk protein source and the carrageenan are dispersed in the skimmed milk fraction prior to mixing into the product from step ii, after which the skimmed milk fraction is then mixed into the product from step ii. This has the advantage that dispersion in the cream fraction is not necessary, which results in less or no fat damage, and helps to avoid butter lumps in the cream.

In a preferred form, a total amount of milk protein source is added which is between 0.01 m% and 5 m% of the total amount of product, preferably between 1 m% and 2.5 m% of the total amount of product, more preferably between 1.5 m% and 2 m% of the total amount of product.

The addition of a milk protein source is advantageous as this addition improves the whitening of the product. This is the visual confirmation to a consumer that a dairy-based sauce is present. The number of protein components increases, and these, in addition to the fat droplets, provide the whitening by refraction of light.

The term "post-homogenization" refers to homogenization following standardization (step vi.).

According to a preferred form, the post-homogenization consists of a first and a second homogenization stage, with the second homogenization stage taking place at a pressure of 5 to 20% of the total pressure. The best results are obtained at a pressure between 10 and 20%, most preferably around 15% of the total pressure. Homogenizers can be equipped with one homogenizer or two homogenizers connected in series. In both one-stage homogenization and two-stage homogenization, the total homogenization pressure over the entire homogenizer is used. In one-stage homogenization, a back pressure is created inherent to the process itself, in two-stage homogenization, the back pressure is created by the second homogenizing device. In this case, the back pressure can be specifically selected and/or set to achieve optimum homogenization efficiency. Two-stage homogenization also reduces noise and vibrations at the outlet of the homogenizer, and therefore also downstream from the homogenizer in the process line. "Homogenizer" is intended to be a homogenizing device capable of carrying out the homogenization as described above.

According to a preferred form, the two-stage post-homogenization takes place at a total pressure between 150 and 250 bar, preferably between 170 and 250 bar, more preferably between 190 and 230 bar, even more preferably between 200 and 220 bar, most preferably about 210 bar. The risk of fat agglomerates forming is less relevant in the two-stage homogenization, as this is followed by a UHT treatment. The homogenization can therefore take place at significantly higher pressures.

According to an embodiment, the second homogenization stage of post-homogenization of the product takes place at a pressure comprised between 10 and 50 bar. This pressure is preferably comprised between 20 and 40 bar, most preferably this pressure is kept stable at about 30 bar. The pressure should be kept as stable as possible, with fluctuations limited to a maximum of 10 bar, more preferably to a maximum of 5 bar. Most preferably, a pressure of 30 bar is aimed at with a maximum fluctuation of 1 bar. Post-homogenization at such a low and stable pressure is in practice only possible at low temperatures. According to an embodiment, the post-homogenization temperature is comprised between 45°C and 60°C, preferably between 50 and 55°C. Preferably, this temperature is about 55°C.

The two-stage high-pressure homogenization is advantageous as the homogenization of the fat droplets present in the dairy improves the whitening of the product. This is the visual confirmation to a consumer that a dairy-based sauce is present. The number of fat droplets increases, and these, in addition to the protein components, provide the whitening by refraction of light.

Moreover, this homogenization is advantageous in combination with the addition of lambda-carrageenan. The latter is very suitable in this application, because of the interaction with the milk proteins, the calcium present in dairy, and the other carrageenan types.

The UHT treatment of the product guarantees a longer shelf life of the cooking cream. As a result of the heat treatment, infectious pathogens, toxin-producing microorganisms, heat-resistant spore formers such as *Clostridium botulinum* or *Bacillus cereus* are eliminated. The classic UHT treatment can be applied using two heating systems: the direct and the indirect system. The indirect system is preferably chosen in the present invention. After the post-homogenization (step iv.), the homogenized product is heated to a temperature between 135 and 150°C, preferably between 135 and 140°C, more preferably about 138°C, and held at that temperature for about 3 to 8 s, preferably between 3 and 5 s, more preferably between 3.5 and 4.5 s, most preferably about 4.1 s. Using ultra-high temperatures for a short period of time can produce a high sterilization effect and cause only minimal changes in the cooking cream. The post-homogenization and UHT treatment already result in a cooking cream with increased stability.

In another or further preferred form, the homogenized product is heated to a temperature between 80 and 100°C, preferably between 85 and 95°C, more preferably between 88 and 92°C, and maintained at that temperature for 1 to 10 minutes, preferably for 3 to 4 minutes. After this, the homogenized product is heated to a temperature between 135 and 150°C, preferably between 135 and 140°C, more preferably about 138°C, and held at that temperature for about 3 to 8 s, preferably between 3 and 5 s, more preferably between 3.5 and 4.5 s, most preferably about 4.1 s. Using ultra-high temperatures for a short period of time can produce a high sterilization effect and cause only minimal changes in the cooking cream. The post-homogenization and UHT treatment already result in a cooking cream with increased stability. The heating in two steps is advantageous since the protein cross-linking and stabilization can be initiated during the first heating for a few minutes.

According to an embodiment, the UHT treatment occurs during post-homogenization.

According to a preferred form, the method comprises between steps v. and vii. further the step of:
vi. cooling the cooking cream to a temperature comprised between 35 and 45°C, preferably 38 and 41°C.

According to a preferred form, the product obtained from step vi. has a viscosity between 330 and 660 mPa·s. A viscosity within this range allows subsequent easy continuous filling, as the product has not yet thickened significantly.

For example, the viscosity can be measured using a Brookfield DV-E type viscometer.

The filling of the product into a packaging should preferably take place at a temperature above 35°C, ideally 38°C, as gelling of the present carrageenans occurs below this temperature. If coagulation takes place during filling and therefore while the product is in motion, lumps will form in the final product, which is undesirable. Preferably, filling takes place at a temperature between 38 and 41°C. Filling temperatures above 41°C make filling mechanically more difficult. Condensation will form against the inside of the cover foil of the packaging, so that the effect for consumers appears to be the same as with whey separation, which is undesirable.

The filling is preferably done in aseptic carton packaging. The cartons may contain different amounts of product such as, for example, but not limited to 125 g, 200 g, 250 g and 500 g.

According to a preferred form, the viscosity of the cooking cream increases between 8 and 12 times during cooling of the cooking cream obtained from step vii.

Cooling is advantageous because during cooling at the end of the process the fat present solidifies, and the emulsifying milk proteins are anchored much more strongly to those fat droplets. The hydrophilic milk protein components still participate in the weak protein-calcium-carrageenan gel that gives the product the unique desired texture. Due to their number and the good interactions with the "free" milk proteins, these homogenized fat particles ensure very good stabilization, thickening and a good influence on the texture.

According to an embodiment, after filling, the product is cooled open (i.e. stacked using the open stacking method on a pallet and not wrapped) by means of non-forced air flows in a cooling unit, so that the product can continue to thicken in the packaging. In this way, the product is cooled relatively quickly, which promotes the gelation of the proteins and carrageenans. The cooking cream obtained after cooling (step viii.) preferably has a viscosity of between 4000 and 6000 mPa·s, preferably between 4250 and 5750 mPa·s, more preferably between 4500 and 5500 mPa·s, even more preferably between 4750 and 5250 mPa·s, most preferably about 5000 mPa·s. This results in a highly thickened product that can be used as a "lump of cream" by the consumer and retains its thickening properties after processing in an application.

In a preferred form, the ratio between the viscosity of the product obtained after cooling (step viii.) and the viscosity of the product obtained from step vi. is between 50/1 and 5/1, preferably between 25/1 and 8/1.

After at least ten days, the open stacking method on the pallet is preferably restacked into a compact stack, and the pallet is wrapped with stretch wrap for transport. After ten days the product has thickened sufficiently in the packaging under the influence of the cold air. If the packaging is restacked and wrapped earlier, the product will not make sufficient contact with the cool air flow, and the solidifying or thickening of the product in the packaging under the influence of the cooling will take too long or will not be fully carried out.

The inventors found that after 10 days the cooking cream comes out of the packaging as a lump (which is the desired effect). It has been found that after less than 10 days the cooking cream is only in the packaging as a thick liquid, and that is insufficient.

According to a preferred embodiment, no modified starches, stabilizers and thickeners are added in addition to carrageenans. The addition of these additives is not necessary because the thickening of the product is ensured by the gelling of the proteins and the optimized process parameters. This is important for obtaining a substantially "clean label" cooking cream. Clean label food products are food products where the label is free of E numbers or where the ingredient list is kept as short as possible. Modified starch is any starch that has been processed in a way, such as E1400 dextrin, E1401 acid-treated starch, E1402 alkali-treated starch, E1403 bleached starch, E1404 oxidized starch, E1410 monostarch phosphate, E1411 distarch glycerol, E1412 distarch phosphate, E1413 phosphated distarch phosphate, E1414 acetylated distarch phosphate, E1420 acetylated starch, E1422 acetylated distarch adipate, E1423 acetylated distarch glycerol, E1440 hydroxypropyl starch, E1441 hydroxypropyl distarch glycerol, E1442 hydroxypropyl distarch phosphate, E1450 starch sodium octenyl succinate, E1451 acetylated oxidized starch and/or E1452 starch aluminum octenyl succinate. Stabilizers are substances primarily capable of binding water and include locust bean gum, guar gum, tragacanth, gum arabic, xanthan gum, gum arabic, alginates, such as sodium, potassium, ammonium, calcium, and propylene glycol alginate, cellulose gum, carrageenan. Thickeners make the product firmer (a kind of binder). Thickeners include E400 alginic acid, E401 sodium alginate, E402 potassium alginate, E403 ammonium alginate, E404 calcium alginate, E405 propylene glycol alginate, E406 agar agar, E410 locust bean gum, E412 guar gum, E413 traganth, E414 gum arabic, E415 xanthan, E416 Karaya (Indian tragacanth), E417 tara gum, E418 gellan, E440 pectin and/or opekta, E440ii amidated pectin, E441 gelatin, E460 microcrystalline cellulose and/or cellulose powder, E461 methylcellulose, E462 ethylcellulose, E463 hydroxypropylcellulose, E465 methylethylcellulose, E466 carboxymethylcellulose and/ or sodium carboxymethylcellulose, or combinations thereof.

A specific preferred form of the invention relates to a method for preparing cooking cream, comprising the steps of:
i. providing a pasteurized cream fraction, pasteurized skimmed milk fraction a milk protein source,
ii. pre-homogenizing the cream fraction,
iii. standardizing the product from step ii. by mixing in the milk fraction until a predetermined fat content is reached and mixing in the milk protein source until a predetermined protein content is reached, with the predetermined fat content being between 20 and 22 m%, and the predetermined protein content being between 3 and 5 m%,
iv. the two-stage post-homogenization of the product from step iii.,
v. the UHT treatment of the product from step iv., whereby cooking cream is obtained,
vii. filling the product from step v., and
viii. cooling the product from step vii.,
wherein an iota-carrageenan, a kappa-carrageenan, and a lambda-carrageenan are added during standardization, wherein the lambda-carrageenan is in proportion to the total of iota- and kappa-carrageenan according to a weight ratio between 90/10 and 99/1, and wherein the cooking cream obtained from step viii. has a viscosity comprised between 4000 and 6000 mPa·s.

In a second aspect, the invention relates to a cooking cream obtained according to an above-mentioned method.

According to a preferred form, the predetermined fat content is comprised between 15 and 22 m%, preferably between 20 m% and 22 m%, more preferably about 21 m%. The fat content is preferably measured according to ISO 2450:2008|IDF 16:2008. Cooking cream must always meet legal requirements in order to be allowed to be marketed as cooking cream or culinary cream. Consumers increasingly want reduced-fat products, but a sufficiently high fat content is necessary to prevent curdling when used in hot dishes. A fat content of 21 m% is sufficient to qualify as cooking cream and does not require the addition of extra thickening agents, such as modified starches to prevent curdling.

According to a preferred embodiment, the cooking cream has a viscosity comprised between 4000 and 6000 mPa·s.

According to a preferred form, the cooking cream contains no modified starches, stabilizers, or thickeners in addition to carrageenan.

According to a preferred embodiment, the whey separation in the cooking cream after 10 days after filling amounts to a maximum of 2 vol%. Vol% means the volume percentage relative to the total volume of cooking cream.

According to a preferred embodiment, the whey separation in the cooking cream after 10 days after filling is between 0.5 and 2 vol%.

According to a preferred embodiment, the whey separation in the cooking cream after 1 year after filling amounts to a maximum of 2 vol%. By 1 year is meant, 1 year after filling the product.

According to a preferred embodiment, the whey separation in the cooking cream after 1 year after filling is between 0.5 and 2 vol%. This means that for 1 year the whey separation in the product will be between 0.5 and 2 vol%.

Advantageously, upon opening the package there is some whey separation. The small amount of whey (minimum 0.5%, typically around the core, not just at the top) acts as a lubricant to allow the contents to slide out as a whole, which is how the consumer prefers to use it: all at once out without leaving anything behind in the packaging. This looks like "a lump," which reminds the consumer of "a lump of butter," and what they are used to dealing with in preparations. However, the whey separation is advantageously not higher than 2 vol%, because the consumer considers this to be "insufficiently bound".

A specific embodiment of the invention relates to a cooking cream, wherein the cooking cream has a fat content comprised between 20 and 22 m%, a protein content comprised between 3 and 5 m%, and a viscosity comprised between 4000 and 6000 mPa·s. The protein content is preferably measured in accordance with ISO 16634-2:2016.

A further specific embodiment of the invention relates to a cooking cream, wherein the cooking cream has a fat content comprised between 20 and 22 m%, a protein content comprised between 3 and 5 m%, and a viscosity comprised between 4000 and 6000 mPa·s, and wherein the whey separation in the cooking cream after 1 year after filling amounts to between 0.5 and 2 vol% of the total volume of cooking cream.

The cooking cream is a cream with a high degree of continued thickening, which significantly increases in viscosity once it's filled, specifically between 8 and 12 times. This is important to obtain a thick cream that does not lose its thickness in an application. The cooking cream can only thicken in the packaging, as otherwise lumps will form.

In what follows, the invention is described by way of non-limiting examples illustrating the invention, and which are not intended to and should not be interpreted as limiting the scope of the invention.

### EXAMPLES

### Example 1: Strongly post-thickening cooking cream with a fat content of 21 m%

Example 1 concerns the preparation of strongly post-thickening cooking cream with a fat content of about 21 m% according to a preferred form of the present invention, as shown in **Figure 1****.** A pasteurized cream fraction **1** with a fat content of about 24 m% is pre-homogenized **2** at about 120 bar and a temperature comprised between 55 and 70°C. The product is mixed **7** with a pasteurized skimmed milk fraction **3** until a fat content of about 21 m% is reached. In this way, the product is standardized, whereby this step must ensure that the desired or legal amount of milk fat is present. Skimmed milk powder **4** is also added during mixing and standardization **7** to increase the protein content to a protein content of approximately 3.3 m%. A first type of carrageenan, preferably an iota-carrageenan **6,** is added for protein stabilization. A second type of carrageenan, preferably a kappa-carrageenan **5,** is added to take care of the post-thickening.

Subsequently, the product obtained after standardization is homogenized a second time **10** by means of a two-stage homogenization at a total pressure of approximately 210 bar. The post-homogenization **10** comprises a first homogenization stage **8** at a pressure of about 180 bar and a second homogenization stage **9** at about 30 bar. The post-homogenization **10** continues at a temperature comprised between 50 and 55°C.

The product is then preheated **11** to a temperature of about 90°C and kept at this temperature for a period of between 1.5 and 4 minutes. Afterwards, the product is UHT treated **12** at a temperature of about 138°C for about 4.1 s.

The product is cooled **13** to a temperature between 35 and 45°C and is filled **14** into aseptic carton packaging.

The cartons are stacked using the open stacking method on a pallet, further cooled **15** and restacked after a minimum of ten days into a close stack for transport **16.**

According to this embodiment, no modified starches, stabilizers and thickeners are added in addition to carrageenans.

### Example 2: Strongly post-thickening cooking cream with a fat content of 21 m%

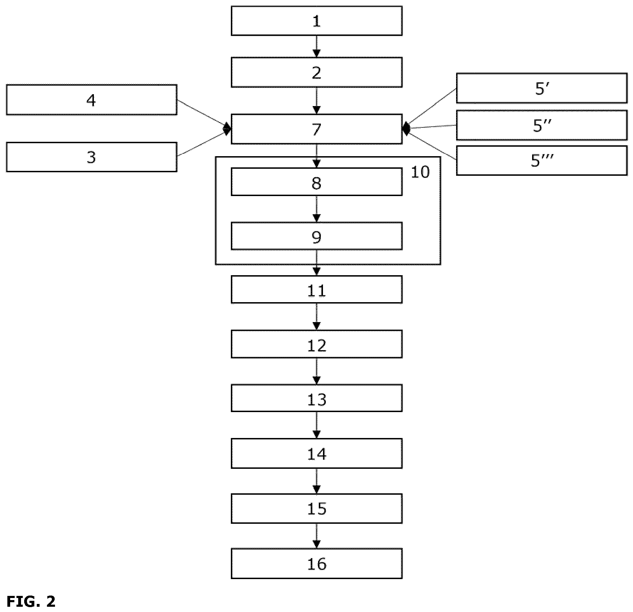

Example 2 concerns the preparation of cooking cream with a fat content of 21 m% according to a preferred form of the present invention carried out according to the same method as described in Example 1, but with the following differences indicated by " ' " in **Figure 2****.**

A first type of carrageenan, preferably an iota-carrageenan **5'**, is added for protein stabilization. A second type of carrageenan, preferably a kappa-carrageenan **5"**, is added to take care of the post-thickening. A third type of carrageenan, preferably a lambda-carrageenan, **5‴** is also added. These three types of carrageenan are preferably added as a carrageenan mixture.

### Comparative Examples 3-6 and Example 7: Adding carrageenan

According to a method as described in the above examples, cooking creams comprising the following types of carrageenan are prepared, shown in Table 1:

**TABLE 1**

| | Lambda-carrageenan | Kappa-carrageenan | Iota-carrageenan |
|---|---|---|---|
| Comparative Example 3 | 0.032 m% | 0.000 m% | 0.000 m% |
| Comparative Example 4 | 0.000 m% | 0.001 m% | 0.001 m% |
| Comparative Example 5 | 0.030 m% | 0.000 m% | 0.002 m% |
| Comparative Example 6 | 0.030 m% | 0.002 m% | 0.000 m% |
| Example 7 | 0.030 m% | 0.001 m% | 0.001 m% |

The inventors found that if only lambda-carrageenan was added during standardization (Comparative Example 3), the viscosity of the product increased significantly after filling, but a sticky product was obtained that did not easily come back out of the packaging. If no lambda-carrageenan was added (Comparative Example 4), a product was obtained which had a low hot viscosity but showed strong clot formation.

The inventors found that if kappa-carrageenan was not added (Comparative Example 5), a strong whey separation occurred in the packaging and that the product was too sticky and not thickened enough. The inventors also found that if no iota-carrageenan was added (Comparative Example 6), the product was insufficiently thickened after filling, and there was significant clot formation.

Addition of three types of carrageenan (Example 6) turned out to yield a strongly post-thickening product that could be packaged as a lump of cooking cream.

### Examples 8-10 and Comparative Examples 11-12: Use of the cooking cream in preparations

Examples 8-10 and Comparative Examples 11 and 12 (shown in Table 2) relate to the use of cooking cream with a fat content of about 21 m% in the preparation of hot meals such as soups and sauces.

A lump of cooking cream according to a preferred form of the present invention was added to a warm sauce (Example 8). The inventors found that the product (under the influence of heat or stirring) easily opens up into a thick cream sauce, with the taste being easily released. This is due to the weak gel formed by the carrageenans and the manufacturing process, which releases the flavor significantly faster than a firm gel.

Examples 9-10 concern cooking creams to which kappa- and iota-carrageenan have also been added during standardization. These products were added to a warm sauce. A lower amount of iota- and kappa-carrageenan was easily found to give a thick sticky mass (Example 9). A higher amount of iota- and kappa-carrageenan gives a gel that flows opens much too slowly, and therefore gives flavor and thickening too slowly (Example 10).

A commercial cooking cream comprising starch as a stabilizer is also added to a warm sauce (Comparative Example 11). The inventors found that the flavor is released considerably more slowly. This is due to the firm gel that is created by the starch.

A commercial cooking cream comprising only lambda-carrageenan as a stabilizer is also added to a warm sauce (Comparative Example 12). The inventors found that the product is thinner and stickier. This is due to the less firm gel formed by the carrageenan.

**TABLE 2**

| | Fat content | Starch? | Lambda-carrageenan? | Iota- and kappa-carrageenan? |
|---|---|---|---|---|
| Example 8 | 21 m% | No | Yes, 0.030 m% | Yes, 0.002 m% |
| Example 9 | 21 m% | No | Yes, 0.0315 m% | Yes, 0.0005 m% |
| Example 10 | 21 m% | No | Yes, 0.026 m% | Yes, 0.006 m% |
| Comparative Example 11 | 21 m% | Yes, 0.5 m% | No | No |
| Comparative Example 12 | 21 m% | No | Yes, 0.025 m% | No |

## Claims

1. Method for preparing cooking cream, comprising the steps of:
i. providing a pasteurized cream fraction, pasteurized skimmed milk fraction a milk protein source,
ii. pre-homogenizing the cream fraction,
iii. standardizing the product from step ii. by mixing in the milk fraction until a predetermined fat content is reached and mixing in the milk protein source until a predetermined protein content is reached, with the predetermined fat content being between 20 and 22 m%, and the predetermined protein content being between 3 and 5 m%,
iv. the two-stage post-homogenization of the product from step iii.,
v. the UHT treatment of the product from step iv., whereby cooking cream is obtained,
vii. filling the product from step v., and
viii. cooling the product from step vii.,
wherein an iota-carrageenan, a kappa-carrageenan, and a lambda-carrageenan are added during standardization, wherein the lambda-carrageenan is in proportion to the total of iota- and kappa-carrageenan according to a weight ratio between 90/10 and 99/1, and wherein the cooking cream obtained from step viii. has a viscosity comprised between 4000 and 6000 mPa·s.

2. Method according to claim 1, wherein the total amount of iota-carrageenan, kappa-carrageenan, and lambda-carrageenan added is between 0.01 m% and 0.05 m% of the total amount of product.

3. Method according to any of the preceding claims, wherein a total amount of iota- and kappa-carrageenan is added, which is between 0.001 m% and 0.005 m% of the total amount of product.

4. Method according to any of the preceding claims, wherein in step iii, the milk protein source and the carrageenan are dispersed in the skimmed milk fraction prior to mixing into the product from step ii, after which the skimmed milk fraction is then mixed into the product from step ii.

5. Method according to any of the preceding claims, wherein the post-homogenization comprises a first and a second homogenization stage, the second homogenization stage taking place at a pressure of 5 to 20% of the total pressure.

6. Method according to any of the preceding claims, wherein between steps v. and vii. the method further comprises the step of:
vi. cooling the cooking cream to a temperature comprised between 35 and 45°C.

7. Method according to claim 6, wherein the cooling of the cooking cream continues to a temperature comprised between 38 and 41°C

8. Method according to claim 6 or 7, wherein the product from step vi. has a viscosity comprised between 330 and 660 mPa·s.

9. Method according to any of the preceding claims, wherein during the cooling of the cooking cream obtained from step vii., the viscosity of the cooking cream increases between 8 and 12 times.

10. Method according to claims 6 or 7, wherein the ratio between the viscosity of the product obtained after cooling (step viii.) and the viscosity of the product obtained from step vi. is between 50/1 and 5/1, preferably between 25/1 and 8/1.

11. Method according to any of the preceding claims, wherein the post-homogenization continues at a total pressure between 150 and 250 bar.

12. Method according to any of the preceding claims, wherein pre-homogenization continues at a temperature comprised between 50°C and 75°C.

13. Method according to any of the preceding claims, wherein the pre-homogenization continues at a pressure comprised between 100 and 120 bar.

14. A cooking cream **characterized in that** the cooking cream has a fat content comprised between 20 and 22 m%, a protein content comprised between 3 and 5 m%, and a viscosity comprised between 4000 and 6000 mPa·s.

15. Cooking cream according to claim 14, wherein the whey separation in the cooking cream after 1 year after filling amounts to between 0.5 and 2 vol% of the total volume of cooking cream.
